# EUROPÄISCHE PATENTSCHRIFT

(11) **EP 2 979 007 B1**
(45) Veröffentlichungstag und Bekanntmachung des Hinweises auf die Patenterteilung: **29.07.2020**
(21) Anmeldenummer: 14711751.9
(22) Anmeldetag: 20.03.2014
(51) Int. Cl.: F16H 61/00, F16J 15/08

(54) **EINHEIT MIT STEUERPLATTE**
UNIT WITH CONTROL PLATE
ENSEMBLE AVEC PLAQUE DE COMMANDE

(30) Priorität: 25.03.2013 DE 102013205220
(43) Veröffentlichungstag der Anmeldung: 03.02.2016
(73) Patentinhaber: ElringKlinger AG, 72581 Dettingen (DE)
(72) Erfinder: SCHÖLLHAMMER, Jochen, 72581 Dettingen (DE)
(74) Vertreter: Hoeger, Stellrecht & Partner Patentanwälte mbB
(86) Internationale Anmeldenummer: PCT/EP2014/055628
(87) Internationale Veröffentlichungsnummer: WO 2014/154564

(56) Entgegenhaltungen:
- DE-A1-102004 034 824
- DE-A1-102008 062 829
- DE-B3-102009 008 019
- DE-U1-202012 012 058

## Beschreibung

Die Erfindung betrifft eine Einheit umfassend zwei Hydraulikeinheiten und eine zwischen den zwei Hydraulikeinheiten, insbesondere zwischen den zwei Hydraulikeinheiten eines Getriebes, montierte Steuerplatte, die Steuerplatte umfassend eine Zwischenlage mit Durchbrüchen zur Fluidführung und beiderseits der Zwischenlage angeordnete metallische Dichtungslagen mit Durchbrüchen zur Fluidführung und linienförmig zwischen den Durchbrüchen verlaufende Dichtsicken zur Abdichtung zwischen der Zwischenlage und den beiderseits dieser gegenüberliegenden Hydraulikeinheiten.

Derartige Steuerplatten sind aus dem Stand der Technik bekannt. Beispielsweise wird in der DE 10 2009 008 019 B3 eine Getriebesteuerplatte offenbart, bei welcher sich eine Mikrosicke an Bauteilunebenheiten plastisch anpassen soll.

Bei diesen besteht jedoch stets die Anforderung die Abdichtung zwischen der Zwischenlage und den Hydraulikeinheiten zu optimieren.

Der Erfindung liegt daher die Aufgabe zugrunde, eine Steuerplatte der eingangs beschriebenen Art derart zu verbessern, dass eine optimale Abdichtung zwischen der Zwischenlage und den Hydraulikeinheiten möglich ist.

Diese Aufgabe wird erfindungsgemäß durch eine Einheit gemäß Anspruch 1 gelöst.

Der Vorteil der erfindungsgemäßen Lösung ist somit darin zu sehen, dass durch die Ausbildung der Form der Dichtsicken und die Auswahl des Materials der Dichtungslagen ein Verhalten der Dichtsicken erreicht werden kann, dass bei einer plastoelastischen Deformation beim Einbau der Steuerplatte zwischen den Hydraulikeinheiten unabhängig vom Ort, an welchem die Abdichtung erfolgen soll, mit den Dichtsicken eine festgelegte Mindestdichtkraft erreichbar ist.

Dabei beträgt die Mindestkraft 5 N/mm².

Ferner ist vorgesehen, die beim Einbau der Steuerplatte auftretende Dichtkraft hinsichtlich ihrer Höhe zu begrenzen, so dass die Dichtkraft 100 N/mm² oder weniger beträgt.

Diese Limitierung der Dichtkraft zu großen Werten hat den Vorteil, dass dadurch eine zu starke Deformation der Hydraulikeinheiten beim Einbau der Steuerplatte zwischen diesen vermieden werden kann.

Die eingangs genannte Aufgabe wird bei einer Steuerplatte der eingangs beschriebenen Art erfindungsgemäß auch dadurch gelöst, dass bei einer Deformation der jeweiligen Dichtsicke auf eine Sickenhöhe, die 5 µm größer ist, als die Sickenhöhe bei Blockverpressung, die Dichtkraft in einem Bereich liegt, der von 40 N/mm² bis 80 N/mm² reicht.

Alternativ oder ergänzend dazu sieht eine weitere Lösung der erfindungsgemäßen Aufgabe vor, dass bei einer Verpressung der Dichtsicken auf eine Sickenhöhe die 50 µm über der Sickenhöhe bei Blockverpressung liegt, die Dichtkraft in einem Bereich liegt, der von 5 N/mm² bis 20 N/mm² reicht.

Es ist ferner vorgesehen, dass die Dichtsicken nach der plastoelastischen Deformation zum Erreichen der vorgesehenen Mindestdichtkraft einen Ausfederweg von 10 µm oder mehr aufweisen, das heißt, dass trotz der plastoelastischen Deformation die Dichtsicken noch federelastisch sind und eine Ausfederung von 10 µm oder mehr gewährleisten.

Ein derartiges Verhalten der Dichtsicken ist deshalb von Bedeutung, damit die Dichtsicken auch noch Deformationen der Hydraulikeinheiten und gegebenenfalls auch noch im Bereich der Trägerplatte folgen können, die aufgrund thermischer Einflüsse oder Druckeinflüsse im Betrieb auftreten.

Noch vorteilhafter ist es, wenn die Dichtsicken nach der plastoelastischen Deformation zum Erreichen der Mindestdichtkraft noch ein Ausfederweg von 15 µm oder mehr aufweisen.

Um insbesondere eine ausreichende Dauerbelastbarkeit der Dichtsicken zu erreichen, ist vorzugsweise vorgesehen, dass die Dichtsicken nach mindestens 1,5 Millionen Ausfederzyklen noch einen Ausfederweg von 10 µm oder mehr sowie die vorgesehene Mindestdichtkraft aufweisen.

Hinsichtlich der Ausbildung der Dichtsicken selbst wurden im Zusammenhang mit der bisherigen Erläuterung der einzelnen Ausführungsbeispiele keine näheren Angaben gemacht.

So sieht eine vorteilhafte Lösung vor, dass die Sickenhöhe der noch undeformierten Dichtsicken in der Dichtungslage 10 µm oder mehr beträgt. Noch besser ist es, wenn die Sickenhöhe der noch undeformierten Dichtsicken in der Dichtungslage 20 µm oder mehr beträgt.

Um die vorteilhaften Eigenschaften der Dichtsicken zu erhalten, ist vorzugsweise vorgesehen, dass die Sickenhöhe der Sicken nicht allzu groß sein soll. Aus diesem Grund ist vorzugsweise vorgesehen, dass die Sickenhöhe der noch undeformierten Dichtsicken in der Dichtungslage 150 µm oder weniger beträgt.

Ferner wurden auch noch hinsichtlich der Sickenbreite keine näheren Angaben gemacht.

So sieht eine vorteilhafte Lösung vor, dass die Sickenbreite der noch undeformierten Dichtsicken 0,5 mm oder mehr beträgt.

Eine derartige Sickenbreite der Dichtsicke ist für das Verhalten, insbesondere das plastoelastische Verhalten, der Dichtsicken mit verantwortlich und trägt dazu bei auch den notwendigen Ausfederweg nach der plastoelastischen Deformation zu gewährleisten.

Die Sickenbreite sollte allerdings auch nicht zu groß sein, aus diesem Grund ist vorzugsweise vorgesehen, dass die Sickenbreite der noch undeformierten Dichtsicken 1,5 mm oder weniger beträgt.

Ferner wurden auch die Dichtungslagen hinsichtlich ihrer Materialdicke nicht näher spezifiziert.

Aus diesem Grund ist vorzugsweise vorgesehen, dass die Materialdicke der Dichtungslage 150 µm oder mehr beträgt.

Vorzugsweise ist die Materialdicke der Dichtungslage allerdings nicht allzu groß zu wählen, aus diesem Grund ist zweckmäßigerweise vorgesehen, dass die Materialdicke der Dichtungslage 300 µm oder weniger beträgt.

Die Dichtungslage kann dabei aus den unterschiedlichsten Materialien ausgebildet sein.

So sieht eine vorteilhafte Lösung vor, dass die Dichtungslage aus Stahl, insbesondere aus Kohlenstoffstahl ausgebildet ist.

Ferner ist die Dichtungslage vorzugsweise aus einem Material ausgebildet, welches einen Elastizitätsmodul von 500 N/mm² oder weniger aufweist.

Alternativ oder ergänzend zu den vorstehend beschriebenen Lösungen sieht eine weitere Lösung der erfindungsgemäßen Aufgabe vor, dass die Dichtsicken der jeweiligen Dichtungslage auf ihrer der jeweiligen Hydraulikeinheit zugewandten Seite mit einer Elastomerbeschichtung versehen sind.

Eine derartige Elastomerbeschichtung schafft die Möglichkeit, Oberflächenrauhigkeiten der Hydraulikeinheiten im Bereich ihrer der Dichtungslage zugewandten Stirnseiten auszugleichen und dadurch den dichten Abschluss zwischen der Stirnseite der jeweiligen Hydraulikeinheit und der jeweiligen Dichtsicke zu verbessern.

Alternativ oder ergänzend ist ferner bei einer Lösung der erfindungsgemäßen Aufgabe vorgesehen, dass die Sickenfüße der jeweiligen Dichtungslage auf ihrer der Zwischenlage zugewandten Seite mit einer Elastomerbeschichtung versehen sind.

Auch eine derartige Elastomerbeschichtung schafft die Möglichkeit, die Abdichtung zwischen der Dichtsicke und der Zwischenlage zu verbessern, insbesondere auch im Hinblick auf die Abdichtung bei Oberflächenrauhigkeiten der Zwischenlage.

Hinsichtlich der Dicke der Elastomerbeschichtung wurden bislang keine näheren Angaben gemacht, so sieht eine vorteilhafte Lösung vor, dass die Elastomerbeschichtung eine Dicke von 10 µm oder mehr aufweist.

Um die Dicke der Elastomerbeschichtung nicht allzu groß werden zu lassen ist vorzugsweise vorgesehen, dass die Elastomerbeschichtung eine Dicke von 50 µm oder weniger aufweist.

Im Zusammenhang mit der bisherigen Erläuterung der einzelnen Ausführungsbeispiele der Steuerplatte wurde nicht näher darauf eingegangen, wie die Zwischenlage ausgebildet sein soll.

So hat es sich zur Lösung der eingangs genannten Aufgabe als zweckmäßig erwiesen, wenn die Zwischenlage eine Dicke von 800 µm oder mehr aufweist, um der Zwischenlage eine ausreichende Stabilität zu verleihen.

Insbesondere ist eine ausreichende Stabilität erforderlich, um den Dichtsicken eine ausreichende Abstützung derselben relativ zueinander zu gewährleisten, beispielsweise wenn die Dichtsicken auf unterschiedlichen Seiten der Zwischenlage nicht deckungsgleich angeordnet sind.

Um die Materialdicke der Zwischenlage nicht allzu groß werden zu lassen, hat es sich als vorteilhaft erwiesen, wenn die Zwischenlage eine Materialdicke von 2600 µm oder weniger aufweist.

Auch hinsichtlich des Materials der Zwischenlage wurden keine näheren Angaben gemacht.

So sieht eine zweckmäßige Lösung vor, dass die Zwischenlage aus federstahlfreiem Material ist.

Vorzugsweise ist dabei die Zwischenlage aus Stahl ausgebildet.

Eine zweckmäßige Stahlsorte für die Ausbildung der Zwischenlage ist Kohlenstoffstahl.

Alternativ dazu ist es aber auch möglich, die Zwischenlage aus Aluminium auszubilden.

Insbesondere ist vorzugsweise vorgesehen, dass die Zwischenlage aus einer Aluminiumlegierung ausgebildet ist.

Eine weitere Alternative sieht vor, dass die Zwischenlage aus AIMg3 oder AlMg4,5Mn0,7 ausgebildet ist.

Auch hinsichtlich der Materialeigenschaften der Zwischenlage hat es sich als zweckmäßig erwiesen, wenn die Zwischenlage aus einem Material ausgebildet ist, welches ein Elastizitätsmodul von 700 N/mm² oder weniger aufweist.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine perspektivische Explosionsdarstellung einer erfindungsgemäßen Steuerplatte;
- Fig. 2: eine ausschnittsweise Darstellung der zwischen zwei Hydraulikeinheiten angeordneten Steuerplatte in einem durch den Schnitt längs Linie 2-2 in Fig. 1 vorgegebenen Teilbereich;
- Fig. 3: eine ausschnittsweise Darstellung der zwischen zwei Hydraulikeinheiten angeordneten Steuerplatte in einem durch den Schnitt längs Linie 3-3 in Fig. 1 vorgegebenen Teilbereich;
- Fig. 4: eine vergrößerte Darstellung einer Sicke zwischen einer Zwischenlage und einer Hydraulikeinheit im noch nicht deformierten Zustand;
- Fig. 5: eine Darstellung ähnlich Fig. 4 der Sicke im deformierten eingebauten Zustand;
- Fig. 6: ein Diagramm, welches ein plastoelastisches Verhalten der Sicken bei Deformation während des Einbaus im Zusammenhang mit der von den Sicken erzeugten Dichtkraft darstellt;
- Fig. 7: eine Darstellung ähnlich Fig. 6 mit einer Korrelation der einzelnen Orte der Deformation der Dichtsicken in Verbindung mit einer Darstellung der Dichtsicke gemäß Fig. 2;
- Fig. 8: einen vergrößerten Schnitt einer Dichtsicke ähnlich Fig. 4 eines zweiten Ausführungsbeispiels einer erfindungsgemäßen Steuerplatte mit einer Vollelastomerbeschichtung der Dichtungslage und
- Fig. 9: einen vergrößerten Schnitt durch eine Dichtsicke ähnlich Fig. 4 mit einer streifenweisen Elastomerbeschichtung der Dichtungslage.

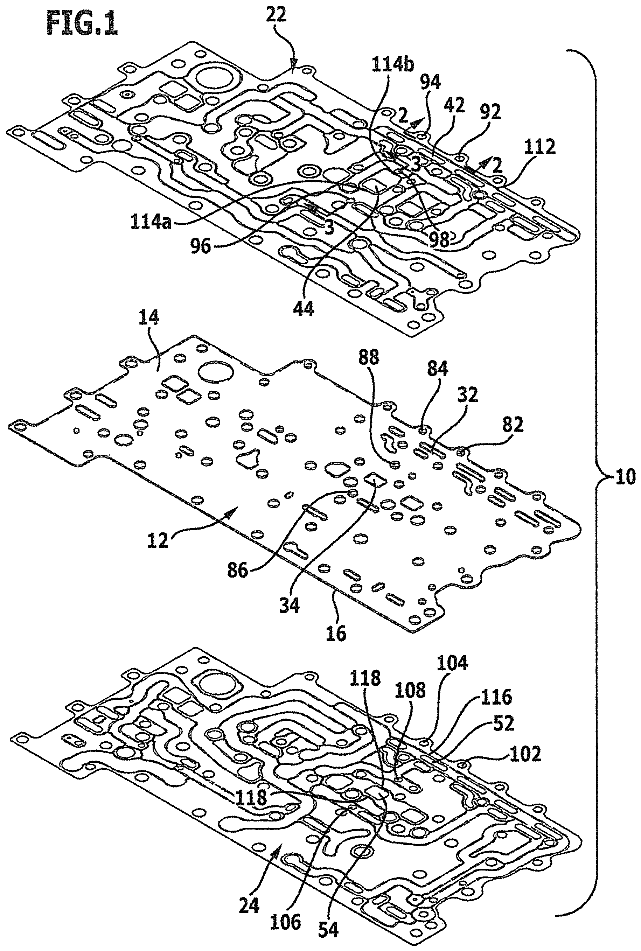

Ein in Fig. 1 dargestelltes erstes Ausführungsbeispiel einer erfindungsgemäßen Steuerplatte 10 zur Montage zwischen zwei Hydraulikeinheiten, insbesondere zwei Hydraulikeinheiten eines Getriebes eines Kraftfahrzeugs, umfasst eine als Ganzes mit 12 bezeichnete und sich flächenhaft erstreckende Zwischenlage 12, welche eine erste Flachseite 14 und eine zweite Flachseite 16 aufweist, auf welchen jeweils als Funktionslage eine metallische Dichtungslage 22 bzw. 24 auflegbar ist.

Die Zwischenlage ist dabei beispielsweise mit mehreren, insbesondere unterschiedlich gestalteten Durchbrüchen 32 bzw. 34 versehen, welche ein Hindurchtreten eines Fluids durch die Zwischenlage 12 zulassen. Korrespondierend mit den Durchbrüchen 32 und 34 ist die erste Dichtungslage 22 ebenfalls mit entsprechend angeordneten Durchbrüchen 42 und 44 versehen und die zweite Dichtungslage 24 ist ebenfalls mit den Durchbrüchen 32 und 34 korrespondierenden Durchbrüchen 52 bzw. 54 versehen, so dass insgesamt ein Fluid, vorzugsweise ein Hydraulikfluid, durch die gesamte Steuerplatte 10 hindurchtreten kann, wobei dieses dann beispielsweise im Bereich der Durchbrüche 42 ,32 und 52 durch die Steuerplatte 10 hindurchtritt oder beispielsweise im Bereich der Durchbrüche 44, 34 und 54 durch die Steuerplatte 10 hindurchtritt.

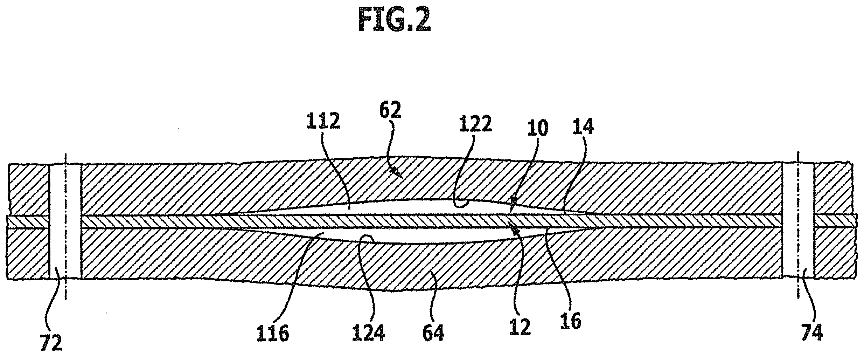

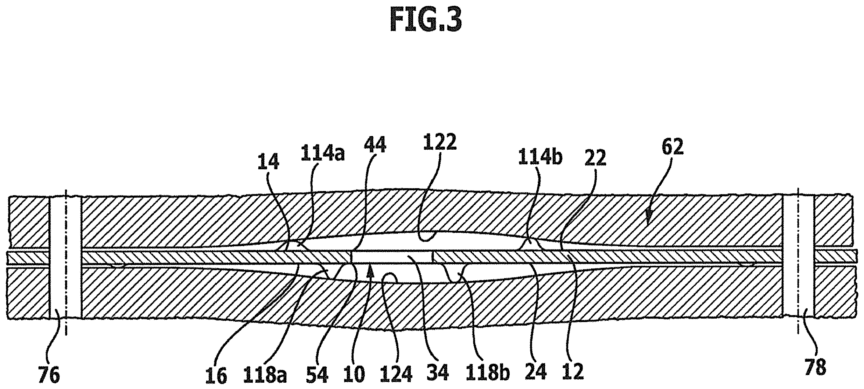

Eine derartige Steuerplatte 10 ist, wie in den Fig. 2 und 3 dargestellt, zwischen zwei Hydraulikeinheiten 62 und 64 angeordnet, die in Fig. 2 und 3 nur mit einem an einem Teilausschnitt der Steuerplatte 10 angrenzenden und jeweils zwischen zwei Verbindungsschrauben 72 und 74 bzw. 76 und 78 liegenden Teilbereich dargestellt sind.

Um die zwei Hydraulikeinheiten 62 und 64 mittels der Verbindungsschrauben 72, 74, 76, 78 verbinden zu können, weisen daher sowohl die Zwischenlage 12 als auch die erste Dichtungslage 22 und die zweite Dichtungslage 24 zusätzlich zu den Durchbrüchen 32 und 34, 42 und 44 sowie 52 und 54 noch Schraubendurchbrüche 82, 84 bzw. 86, 88 in der Zwischenplatte 12, 92, 94 bzw. 96, 98 in der ersten Dichtungslage 22 sowie 102, 104 bzw. 106, 108 in der zweiten Dichtungslage 24 auf, die alle miteinander fluchten, so dass durch diese Schraubendurchbrüche 82 bis 88, 92 bis 98 und 102 bis 108 die Verbindungsschrauben 72 und 74 bzw. 76 und 78 hindurchgreifen können, um die Hydraulikeinheiten 62 und 64 fest miteinander zu verbinden.

Um im Bereich der Durchbrüche 32 bzw. 34 sowie 42 bzw. 44 und 52 bzw. 54 einerseits eine Abdichtung zu den Hydraulikeinheiten 62 und 64 sowie auch zu der Zwischenlage 12 zu schaffen, sind die Dichtungslagen 22 und 24 mit linienförmig die Durchbrüche 32 und 34 umschließenden Dichtsicken 112 und 114 in der ersten Dichtungslage 22 sowie Dichtsicken 116 und 118 in der zweiten Dichtungslage 24 versehen, wobei die Dichtsicke 112, wie in Fig. 2 dargestellt, eine Abdichtung zwischen der ersten Flachseite 14 der Zwischenlage 12 und einer der Steuerplatte 10 zugewandten Stirnseite 122 der ersten Hydraulikeinheit 62 bewirkt und die Dichtsicke 114 eine Abdichtung zwischen der ersten Flachseite 14 der Zwischenlage 12 und der Stirnseite 122 der ersten Hydraulikeinheit 62 bewirkt.

Ferner bewirkt die Dichtsicke 116, wie in Fig. 2 dargestellt, eine Abdichtung zwischen der zweiten Flachseite 16 der Zwischenlage 12 und einer Stirnseite 124 der zweiten Hydraulikeinheit 64, welche der Steuerplatte 10 zugewandt ist.

Außerdem bewirkt die Dichtsicke 114, wie in Fig. 3 dargestellt, eine Abdichtung zwischen der ersten Flachseite 14 der Zwischenlage 12 und der Stirnseite 122 der ersten Hydraulikeinheit 62.

In gleicher Weise bewirkt die Dichtsicke 118, wie in fig. 3 dargestellt, eine Abdichtung zwischen der zweiten Flachseite 16 der Zwischenlage 12 und der Stirnseite 124 der zweiten Hydraulikeinheit 64.

In Fig. 2 und 3 ist die Deformation der Hydraulikeinheiten 62 und 64 zwischen jeweils zwei diese verbindenden Schrauben 72 und 74 bzw. 76 und 78 übertrieben dargestellt, wobei jeweils im Bereich der Verbindungsschrauben 72 und 74 bzw. 76 und 78 die Hydraulikeinheiten 62 und 64 mit ihren Stirnseiten 122 bzw. 124 mit maximaler Kraft auf die Dichtungslage 22 bzw. 24 wirken, so dass selbst eine im Bereich um die Verbindungsschrauben 72 und 74 bzw. 76 und 78 verlaufende Sicke, wie zum Beispiel die Sicke 112 bzw. 116, mehr oder weniger flachgedrückt ist, während sich die Stirnseiten 122 und 124 der Hydraulikeinheiten 62 bzw. 64 in den Bereichen zwischen den Verbindungsschrauben 72 und 74 bzw. 76 und 78 zunehmend voneinander entfernen, so dass die Stirnseiten 122 und 124 in einem ungefähr mittigen Bereich zwischen jeweils zwei Verbindungsschrauben 72 und 74 bzw. 76 und 78 den größten Abstand voneinander aufweisen.

Aus diesem Grund sind auch die verformbaren Dichtsicken 112 und 114 bzw. 116 und 118 erforderlich, um in dem gesamten Bereichen zwischen zwei Verbindungsschrauben 72 und 74 bzw. 76 und 78 eine zuverlässige Abdichtung zwischen den Flachseiten 14 und 16 der Zwischenlage 12 und den Stirnseiten 122 bzw. 124 der Hydraulikeinheiten 62 bzw. 64 zu erreichen.

Die Dichtsicken 112 und 114 bzw. 116 und 118 sorgen somit stets für eine zuverlässige Abdichtung zwischen den Hydraulikeinheiten 62 und 64 und der Zwischenplatte 12 unabhängig davon, wie weit der jeweilige Ort der Abdichtung von den Bereichen entfernt ist, in denen Verbindungsschrauben 72 und 74 bzw. 76 und 78 die Steuerplatte 10 durchsetzen.

Die Dichtsicken 112 und 114 bzw. 116 und 118 könnten theoretisch Halbsicken sein.

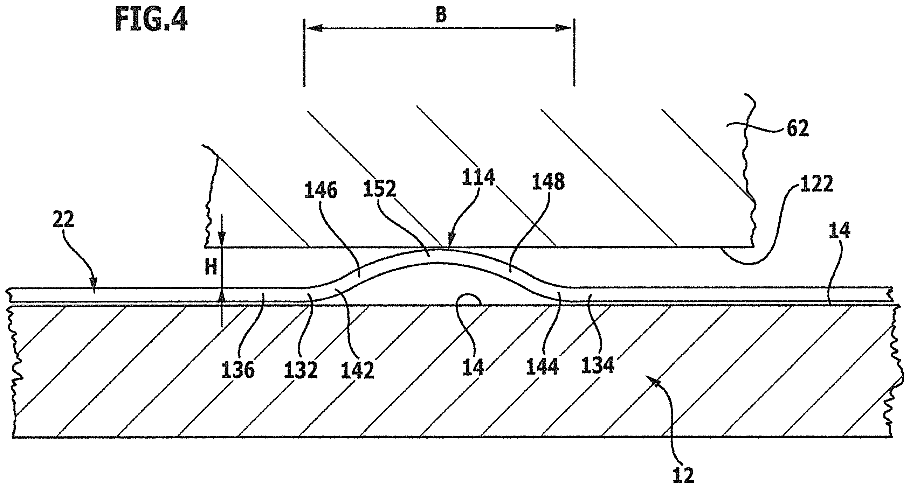

Besonders vorteilhaft ist es jedoch, wenn die Dichtsicken 112, 114, 116 und 118 Vollsicken sind, wie in Fig. 4 am Beispiel der Dichtsicke 114 dargestellt ist.

Jede der Dichtsicken 112, 114, 116 und 118 umfasst zwei Sickenfüße 132 und 134, welche an einen Flachbereich 136 der jeweiligen Dichtungslage 22 bzw. 24 anschließen und einen Sickenfußknick 142 bzw. 144 bilden, ausgehend von welchem sich die jeweilige Sicke mit Sickenflanken 146 und 148 bis zu einem Sickenkamm 152 erhebt, wobei im Bereich des Sickenkamms 152 die beiden Sickenflanken 146 und 148 ineinander übergehen (Fig. 4).

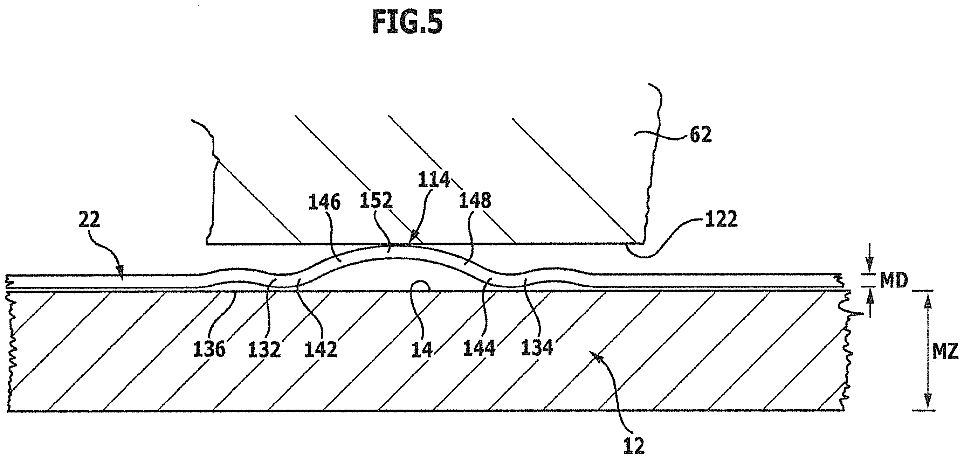

Eine Beaufschlagung der jeweiligen Dichtsicke, beispielsweise der Sicke 114, durch die Stirnseite 122 der ersten Hydraulikeinheit 62 führt nun im Bereich des Sickenkamms 152 zu einer linienförmigen Abdichtung zwischen der Sicke 114 und der Stirnseite 122 der jeweiligen, beispielsweise der ersten, Hydraulikeinheit 62 einerseits und andererseits zu einer linienförmigen Abdichtung im Bereich der ersten Flachseite 14 der Zwischenlage 12 im Bereich der Sickenfußknicks 142 und 144, wobei, wie in Fig. 5 dargestellt, die Sickenfüße 132 und 134 mit ihren den Sickenflanken 146 und 148 abgewandten Bereichen sich von der ersten Flachseite 14 geringfügig abheben, so dass lediglich im Bereich der Sickenfußknicks 142 und 144 sich die linienförmige Abdichtung mit der ersten Flachseite 14 der Zwischenlage 12 ergibt, wie in Fig. 5 dargestellt.

Wie in Fig. 4 dargestellt, haben die Dichtsicken 112, 114, 116 und 118 im undeformierten Zustand eine Sickenhöhe H, die in einem Bereich liegt, der gleich oder größer 0,02 mm und gleich oder kleiner 0,10 mm ist.

Ferner haben die Dichtsicken im undeformierten Zustand gemäß Fig. 4 eine Sickenbreite B, die in einem Bereich liegt, der gleich oder größer 0,5 mm und kleiner oder gleich 1,5 mm ist.

Um optimale Deformationseigenschaften der Dichtsicken 112, 114, 116 und 118 zu erreichen, sind vorzugsweise die erste Dichtungslage 22 und die zweite Dichtungslage 24 aus einem Material hergestellt, welches auch bei geringer Deformation der Dichtsicken, insbesondere in den mittigen Bereichen zwischen jeweils zwei Verbindungsschrauben 72 und 74 oder 76 und 78 stets noch eine ausreichende Mindestdichtkraft zur Verfügung stellt, wobei die Mindestdichtkraft 5 N/mm² betragen soll.

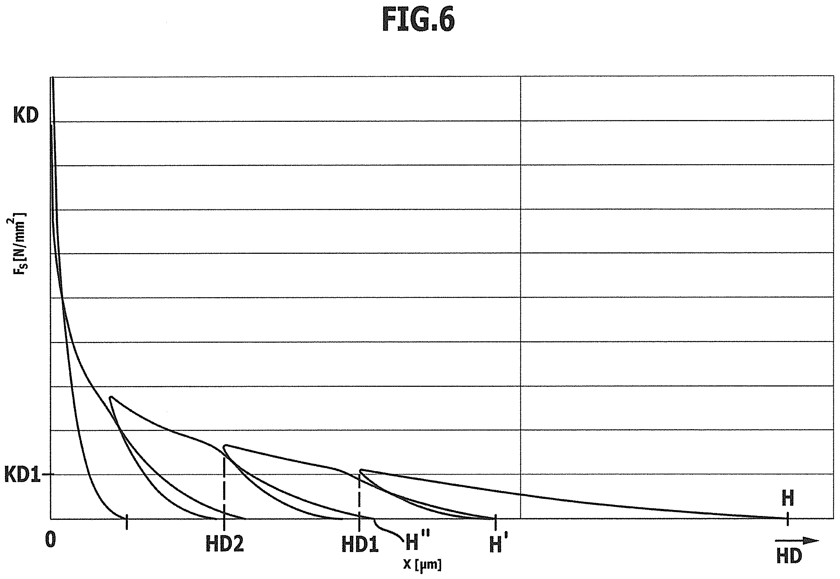

Das Verhalten des Materials der Dichtungslagen 22 und 24 ist schematisch in Fig. 6 dargestellt, wobei Fig. 6 die Dichtkraft KD zeigt, die über der Höhe der Dichtsicken HD im deformierten Zustand aufgetragen ist.

Wird beispielsweise eine Dichtsicke der Höhe H deformiert, beispielsweise auf die Höhe HD1, so steigt die Dichtkraft KD auf den Wert KD1 an.

Dabei ist die Deformation der Dichtsicke ausgehend von der Höhe H im undeformierten Zustand bis zur Höhe HD1 im deformierten Zustand eine plastoelastische Deformation, was daraus ersichtlich ist, dass in Fig. 6 bei einem erneuten Ausfedern ausgehend von der Höhe HD1 der deformierten Dichtsicke nicht mehr die Höhe H erreicht wird, sondern maximal eine Höhe H' erreicht wird, die kleiner ist, als die Höhe H im nicht deformierten Ausgangszustand der Sicke.

Wird die Dichtsicke ausgehend vom nicht deformierten Ausgangszustand gemäß Fig. 4 mit der Höhe H beispielsweise auf die Höhe HD2, welche kleiner ist als die Höhe HD1, deformiert und kann dann ausfedern, so ist die sich ergebende Sickenhöhe H" ebenfalls geringer als die Ausgangshöhe H und noch geringer als die Höhe H'.

Der Dichtsicke kann auch auf die Höhe HD null, das heißt auf Block, gebracht werden, nämlich dann, wenn die Sicke sich in einem Bereich um eine der Verbindungsschrauben 72 oder 74 bzw. 76 oder 78 befindet. In diesem Fall steigt dann die Kraft KD asymptotisch gegen den Wert unendlich.

Charakteristisch für das Verhalten des Materials der Dichtungslagen 22 und 24 ist die Dichtkraft KD, die erreichbar ist, wenn die jeweilige Sicke 112, 114, 116, 118 auf eine Höhe plastoelastisch verformt wird, die um einen definierten Wert größer ist als die Höhe HD null, das heißt also die Höhe HD bei Blockverpressung der Dichtsicke.

Wird eine Deformation der Dichtsicke durchgeführt, so dass deren Höhe HD noch 50 µm noch über der Sickenhöhe HD bei Blockverpressung liegt, so soll die Dichtkraft im Bereich von 5 N/mm² bis 20 N/mm² liegen.

Wird dagegen die Dichtsicke auf eine Sickenhöhe HD verpresst, die 5 µm größer ist als die Sickenhöhe HD bei Blockverpressung, so soll die Dichtkraft im Bereich von 40 N/mm² bis 80 N/mm² liegen.

Ferner sollte die plastoelastische Verformung derart erfolgen, dass die Dichtsicke bei der Mindestdichtkraft, die bei 5 N/mm² oder mehr liegen soll, noch ein Ausfederweg von 10 µm oder mehr, vorzugsweise 15 µm oder mehr, aufweist.

Darüber hinaus sind auch noch erhöhte Anforderungen an die Zyklenfestigkeit des Materials der Dichtungslage 22, 24 zu stellen.

So ist vorzugsweise vorgesehen, dass die jeweilige Dichtsicke nach mindestens 1,5 Millionen Ausfederzyklen noch ein Ausfederweg von 10 µm oder mehr, sowie die vorgesehene Mindestdichtkraft aufweist.

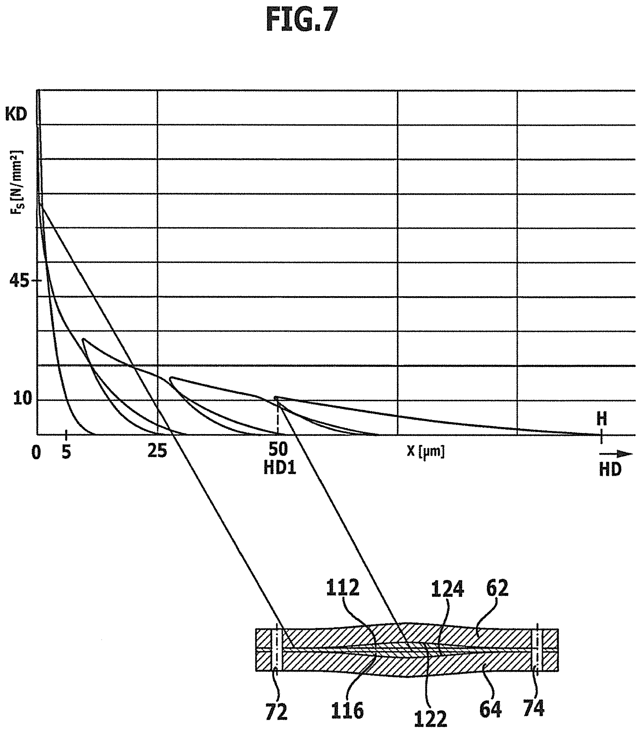

Fig. 7 veranschaulicht nochmals das Verhalten der Dichtkraft KD in Relation zur Höhe HD der deformierten Dichtsicke und setzt diese in Relation zum jeweiligen Ort der Abdichtung zwischen zwei Verbindungsschrauben 72 und 74.

Dabei ist es beispielsweise so, dass zwischen den beiden Verbindungsschrauben 72 und 74, und zwar ungefähr mittig zwischen diesen die Dichtsicke eine Deformation erfährt, die beispielsweise zu einer Sickenhöhe HD von 50 µm über der Sickenhöhe HD bei Blockverpressung, also der theoretischen Sickenhöhe Null liegt, führt.

Dies ist beispielsweise die Sickenhöhe HD1 und bei dieser Sickenhöhe HD1 liegt beispielsweise eine Dichtkraft KD von ungefähr 10 N/mm² vor. Erfolgt eine stärkere Deformation der Dichtsicke, beispielsweise im Bereich nahe der Verbindungsschraube 72, so steigt die Dichtkraft KD mit abnehmender Sickenhöhe an, wobei beispielsweise bei einer Sickenhöhe HD von 5 µm über Blockverpressung eine Dichtkraft von ungefähr 45 N/mm² auftritt.

Hinsichtlich der Materialdicke der Dichtungslagen 22 und 24 wurden bislang keine näheren Angaben gemacht.

So ist vorzugsweise vorgesehen, dass eine Materialdicke MD der Dichtungslagen 22, 24 beispielsweise 150 µm oder mehr beträgt.

Vorzugsweise ist die Materialdicke MD der Dichtungslagen 22, 24 zu größeren Werten dahingehend begrenzt, dass die Materialdicke 300 µm oder weniger beträgt.

Hinsichtlich der Materialien für die Dichtungslagen 22 und 24 wurden ebenfalls keine näheren Angaben gemacht.

Vorzugsweise ist dabei vorgesehen, dass die Dichtungslagen 22, 24 aus Kohlenstoffstahl ausgebildet sind.

Zweckmäßigerweise hat das Material der Dichtungslagen dabei ein Elastizitätsmodul von 500 N/mm² oder weniger.

Hinsichtlich der Ausbildung der Zwischenlage 12 wurden im Zusammenhang mit der bisherigen Erläuterung der einzelnen Ausführungsbeispiele keine näheren Angaben gemacht.

So ist beispielsweise vorgesehen, dass die Zwischenlage eine Materialdicke MZ von 800 µm oder mehr aufweist, wobei die Materialdicke MZ vorzugsweise auf Werte von 2600 µm oder weniger begrenzt ist.

Zweckmäßigerweise ist das Material, aus welchem die Zwischenlage 12 hergestellt ist, ein federstahlfreies Material.

Beispielsweise ist die Zwischenlage 12 aus Stahl hergestellt, wobei der Stahl insbesondere ein Kohlenstoffstahl ist.

Alternativ zur Ausbildung der Zwischenlage 12 aus Stahl ist es ebenfalls denkbar, die Zwischenlage aus Aluminium oder aus AIMg3 oder aus AlMg4,5Mn0,7 oder einer anderen Aluminiumlegierung auszubilden.

Hinsichtlich des Elastizitätsmoduls der Zwischenlage 12 ist es günstig, wenn deren Elastizitätsmodul 700 N/mm² oder weniger beträgt.

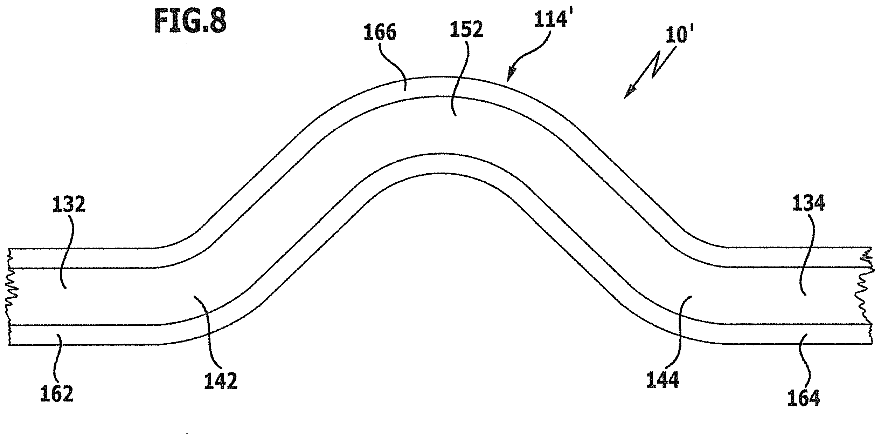

Eine zusätzliche Verbesserung des Dichtverhaltens der Dichtsicken 112, 114, 116, 118 lässt sich bei einem zweiten Ausführungsbeispiel der Steuerplatte 10', wie beispielsweise in Fig. 8 dargestellt, dadurch erreichen, dass die Dichtsicken, beispielsweise die Dichtsicke 114', im Bereich ihrer Sickenfüße 132, 134 und somit auch im Bereich der Sickenfußknicks 142, 144 mit einer Elastomerbeschichtung 162, 164 versehen ist, und zwar auf ihrer der Zwischenlage 12 zugewandten Seite, so dass in diesem Fall die Sickenfußknicks 142 nicht unmittelbar auf der ersten Flachseite 14 der Zwischenlage 12 aufliegen, sondern nur mittelbar über die Elastomerbeschichtung 162, 164, die die Möglichkeit eröffnet, die Dichtigkeit zur ersten Flachseite 14 der Zwischenlage 12 dadurch zu verbessern, dass die Elastomerbeschichtung 162 und 164 jeweils auch noch in der Lage ist Oberflächenrauhigkeiten auszugleichen.

Beispielsweise haben dabei die Elastomerbeschichtungen 162 und 164 eine Dicke von 10 µm oder mehr, wobei die Dicke zweckmäßigerweise auf 50 µm oder weniger begrenzt ist.

Ferner ist ebenfalls vorzugsweise vorgesehen, dass die Sicke 114' im Bereich ihres Sickenkamms 152 mit einer Elastomerbeschichtung 166 versehen ist, welche auf der der Stirnseite 122 der ersten Hydraulikeinheit 62 zugewandten Seite des Sickenkamms 152 angeordnet ist, so dass der Sickenkamm 152 mit der Elastomerbeschichtung 166 an der Stirnseite 122 der ersten Hydraulikeinheit 62 anliegt.

Dabei können die Elastomerbeschichtungen 162 und 164 sowie 166, wie in Fig. 8 dargestellt, vollflächige Elastomerbeschichtungen der Dichtungslagen 22 bzw. 24 sein.

Hinsichtlich der übrigen Merkmale und der Funktion des zweiten Ausführungsbeispiels wird vollinhaltlich auf die Ausführungen zu dem ersten Ausführungsbeispiel Bezug genommen, wobei dieseleben Elemente jeweils mit denselben Bezugszeichen versehen sind.

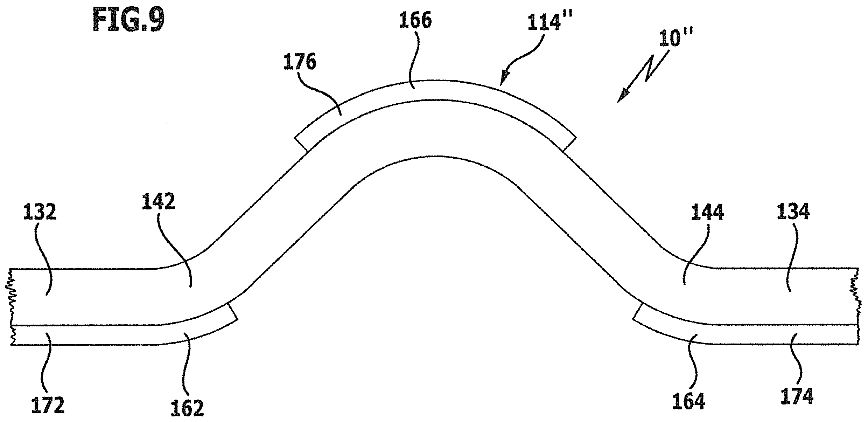

Eine alternative Ausgestaltung erläutert im Zusammenhang mit einem dritten Ausführungsbeispiel der Steuerplatte 10", beispielsweise dargestellt in Fig. 9, sieht jedoch vor, dass die Elastomerbeschichtungen 162, 164 und 166 durch längs der jeweiligen Dichtsicke, beispielsweise der Dichtsicke 114", verlaufende Elastomerstreifen 172, 174 bzw. 176 gebildet sind, die sich beispielsweise durch ein Druckverfahren auf der jeweiligen Seite der Dichtungslagen 22 bzw. 24 auftragen lassen.

Hinsichtlich der übrigen Merkmale und der Funktion des dritten Ausführungsbeispiels wird vollinhaltlich auf die Ausführungen zu dem ersten Ausführungsbeispiel Bezug genommen, wobei dieselben Elemente jeweils mit denselben Bezugszeichen versehen sind.

Bei dem zweiten oder dritten Ausführungsbeispiel kommen vorzugsweise Elastomerbeschichtungen aus ACM, AEM, FPM, MBA zum Einsatz.

## Patentansprüche

1. Einheit umfassend zwei Hydraulikeinheiten (62, 64) und eine zwischen den zwei Hydraulikeinheiten (62, 64), insbesondere zwischen den zwei Hydraulikeinheiten eines Getriebes, montierte Steuerplatte (10), wobei die Steuerplatte (10) eine Zwischenlage (12) mit Durchbrüchen (32, 34) zur Fluidführung und beiderseits der Zwischenlage (12) angeordnete metallische Dichtungslagen (22, 24) mit Durchbrüchen (42, 44, 52, 54) zur Fluidführung und linienförmig zwischen den Durchbrüchen verlaufende Dichtsicken (112, 114, 116 ,118) zur Abdichtung zwischen der Zwischenlage (12) und den beiderseits dieser gegenüberliegenden Hydraulikeinheiten (62, 64) umfasst und wobei die Dichtsicken (112, 114, 116, 118) mit ihren Sickenfüßen (132, 134) zur Abdichtung an der Zwischenlage (12) anliegen und auf ihrer der Zwischenlage (12) abgewandten Seite einen Sickenkamm (152) zur linienförmigen Abdichtung an der jeweiligen Hydraulikeinheit (62, 64) aufweisen,
wobei die Dichtsicken (112, 114, 116, 118) in den Dichtungslagen(22, 24) so ausgebildet sind, dass bei einem Verpressen der Dichtsicken (112 ,114, 116, 118) im Zuge des Einbaus der Steuerplatte (10) zwischen die Hydraulikeinheiten (62, 64) sich zumindest bereichsweise eine plastoelastische Deformation einstellt und **dadurch gekennzeichnet, dass** über die gesamte Linienerstreckung des jeweiligen Sickenkamms (152) eine Dichtkraft erreicht wird, die über einer festgelegten Mindestdichtkraft von 5 N/mm² liegt und die Dichtkraft 100 N/mm² oder weniger beträgt, dass die Dichtsicken (112, 114, 116, 118) nach der plastoelastischen Deformation zum Erreichen der vorgesehenen Mindestdichtkraft noch einen Ausfederweg von 10 µm oder mehr aufweisen, und dass bei einer plastoelastischen Deformation der jeweiligen Dichtsicke (112, 114, 116, 118) auf eine Sickenhöhe (HD), die 5 µm größer ist als die Sickenhöhe (HD) bei Blockverpressung, die Dichtkraft (DK) in einem Bereich liegt, der von 40 N/mm² bis 80 N/mm² reicht, und/oder dass bei einer plastoelastischen Deformation der Dichtsicken (112, 114, 116, 118) auf eine Sickenhöhe (HD), die 50 µm über der Sickenhöhe (HD) bei Blockverpressung liegt, die Dichtkraft (DK) in einem Bereich liegt, der von 5 N/mm² bis 20 N/mm² reicht, wobei eine Blockverpressung durch eine Sickenhöhe (HD) gleich null definiert wird.

2. Einheit nach Anspruch 1, **dadurch gekennzeichnet, dass** die Dichtsicken (112, 114, 116, 118) nach der plastoelastischen Deformation zum Erreichen der vorgesehenen Mindestdichtkraft noch einen Ausfederweg von 15 µm oder mehr aufweisen.

3. Einheit nach Anspruch 2, **dadurch gekennzeichnet, dass** die Dichtsicken (112, 114, 116, 118) nach mindestens 1,5 Millionen Ausfederzyklen noch einen Ausfederweg von 10 µm oder mehr sowie die vorgesehene Mindestdichtkraft aufweisen.

4. Einheit nach einem der voranstehenden Ansprüche, **dadurch gekennzeichnet, dass** die Sickenhöhe (H) der noch undeformierten Dichtsicken (112, 114, 116, 118) in der Dichtungslage (22, 24) 10 µm oder mehr beträgt, insbesondere 20 µm oder mehr beträgt.

5. Einheit nach einem der voranstehenden Ansprüche, **dadurch gekennzeichnet, dass** die Sickenhöhe (H) der noch undeformierten Dichtsicken (112, 114, 116, 118) in der Dichtungslage 150 µm oder weniger beträgt.

6. Einheit nach einem der voranstehenden Ansprüche, **dadurch gekennzeichnet, dass** die Sickenbreite (B) der noch undeformierten Dichtsicken (112, 114 , 116, 118) 0,5 mm oder mehr beträgt und dass insbesondere die Sickenbreite (B) der noch undeformierten Dichtsicken 1,5 mm oder weniger beträgt.

7. Einheit nach einem der voranstehenden Ansprüche, **dadurch gekennzeichnet, dass** die Materialdicke (MD) der Dichtungslage (22, 24) 150 µm oder mehr beträgt.

8. Einheit nach einem der voranstehenden Ansprüche, **dadurch gekennzeichnet, dass** die Materialdicke (MD) der Dichtungslage (22, 24) 300 µm oder weniger beträgt.

9. Einheit nach einem der voranstehenden Ansprüche, **dadurch gekennzeichnet, dass** die Dichtsicken (14') der jeweiligen Dichtungslage (22, 24) auf ihrer der jeweiligen Hydraulikeinheit (62, 64) zugewandten Seite mit einer Elastomerbeschichtung (166) versehen sind.

10. Einheit nach einem der voranstehenden Ansprüche, **dadurch gekennzeichnet, dass** die Sickenfüße (132, 134) der jeweiligen Dichtungslage (22, 24) auf ihrer der Zwischenlage (12) zugewandten Seite mit einer Elastomerbeschichtung (162, 164) versehen sind.

11. Einheit nach Anspruch 9 oder 10, **dadurch gekennzeichnet, dass** die Elastomerbeschichtung (162, 164, 166) eine Dicke von 10 µm oder mehr aufweist und dass insbesondere die Elastomerbeschichtung (162, 164, 166) eine Dicke von 50 µm oder weniger aufweist.

12. Einheit nach einem der voranstehenden Ansprüche, **dadurch gekennzeichnet, dass** die Zwischenlage (12) eine Materialdicke (MZ) von 800 µm oder mehr aufweist und dass die Zwischenlage (12) eine Materialdicke (MZ) von 2600 µm oder weniger aufweist.

## Claims

1. A unit including two hydraulic units (62, 64) and a control plate (10) mounted between the two hydraulic units (62, 64), in particular between the two hydraulic units of a transmission, wherein the control plate (10) comprises an intermediate layer (12) having apertures (32, 34) for guiding fluid, and metal sealing layers (22, 24) that are arranged on either side of the intermediate layer (12) and have apertures (42, 44, 52, 54) for guiding fluid, and linearly formed sealing beads (112, 114, 116, 118) which run between the apertures, for sealing between the intermediate layer (12) and the opposing hydraulic units (62, 64) on either side thereof and wherein, for sealing, the sealing beads (112, 114, 116, 118) abut by means of their bead feet (132, 134) against the intermediate layer (12) and have on their side remote from the intermediate layer (12) a bead crest (152) for linearly sealing to the respective hydraulic unit (62, 64), wherein the sealing beads (112, 114, 116, 118) in the sealing layers (22, 24) are formed such that when the sealing beads (112, 114, 116, 118) are compressed in the course of installing the control plate (10) between the hydraulic units (62, 64) a plasto-elastic deformation is established, at least in certain regions, and **characterised in that** there is achieved over the entire linear extent of the respective bead crest (152) a sealing force which is above a predetermined minimum sealing force of 5 N/mm², and the sealing force is 100 N/mm² or less, and **in that** after the plasto-elastic deformation for achieving the predetermined minimum sealing force, the sealing beads (112, 114, 116, 118) still have a rebound travel of 10 µm or more, and **in that** with a plasto-elastic deformation of the respective sealing bead (112, 114, 116, 118) to a bead height (HD) that is 5 µm greater than the bead height (HD) on complete compression, the sealing force (DK) is in a range of from 40 N/mm² to 80 N/mm², and/or **in that**, with a plasto-elastic deformation of the sealing beads (112, 114, 116, 118) to a bead height (HD) that is 50 µm above the bead height (HD) on complete compression, the sealing force (DK) is in a range of from 5 N/mm² to 20 N/mm², wherein a complete compression is defined by a bead height equal to zero.

2. A unit according to Claim 1, **characterised in that**, after the plasto-elastic deformation for achieving the predetermined minimum sealing force, the sealing beads (112, 114, 116, 118) still have a rebound travel of 15 µm or more.

3. A unit according to Claim 2, **characterised in that**, after at least 1.5 million deflection cycles, the sealing beads (112, 114, 116, 118) still have a rebound travel of 10 µm or more and the predetermined minimum sealing force.

4. A unit according to one of the preceding claims, **characterised in that** the bead height (H) of the not yet deformed sealing beads (112, 114, 116, 118) in the sealing layer (22, 24) is 10 µm or more, in particular is 20 µm or more.

5. A unit according to one of the preceding claims, **characterised in that** the bead height (H) of the not yet deformed sealing beads (112, 114, 116, 118) in the sealing layer (22, 24) is 150 µm or less.

6. A unit according to one of the preceding claims, **characterised in that** the bead width (B) of the not yet deformed sealing beads (112, 114, 116, 118) is 0.5 mm or more and **in that** in particular the bead width (B) of the not yet deformed sealing beads is 1.5 mm or less.

7. A unit according to one of the preceding claims, **characterised in that** the material thickness (MD) of the sealing layer (22, 24) is 150 µm or more.

8. A unit according to one of the preceding claims, **characterised in that** the material thickness (MD) of the sealing layer (22, 24) is 300 µm or less.

9. A unit according to one of the preceding claims, **characterised in that** the sealing beads (14') of the respective sealing layer (22, 24) are provided on their side facing the respective hydraulic unit (62, 64) with an elastomer coating (166).

10. A unit according to one of the preceding claims, **characterised in that** the bead feet (132, 134) of the respective sealing layer (22, 24) are provided on their side facing the intermediate layer (12) with an elastomer coating (162, 164).

11. A unit according to claims 9 or 10 **characterised in that** the elastomer coating (162, 164, 166) has a thickness of 10 µm or more and **in that** in particular the elastomer coating (162, 164, 166) has a thickness of 50 µm or less.

12. A unit according to one of the preceding claims, **characterised in that** the intermediate layer (12) has a material thickness (MZ) of 800 µm or more and **in that** the intermediate layer (12) has a material thickness (MZ) of 2600 µm or less.

## Revendications

1. Unité comprenant deux unités hydrauliques (62, 64) et une plaque de commande (10) montée entre les deux unités hydrauliques (62, 64), notamment entre les deux unités hydrauliques d'une transmission, dans laquelle la plaque de commande (10) comprend une couche intermédiaire (12) ayant des passages (32, 34) permettant de guider le fluide et des couches d'étanchéité (22, 24) métalliques, qui sont disposées des deux côtés de la couche intermédiaire (12) et qui comportent des passages (42, 44, 52, 54) permettant de guider le fluide et des moulures d'étanchéité (112, 114, 116, 118) s'étendant de manière linéaire entre les passages et destinées à assurer l'étanchéité entre la couche intermédiaire (12) et les unités hydrauliques (62, 64) se faisant face des deux côtés de celle-ci, et dans laquelle les moulures d'étanchéité (112, 114, 116, 118) s'appliquent avec leurs pieds de moulure (132, 134) aux fins d'étanchéité contre la couche intermédiaire (12) et présentent sur leur face éloignée de la couche intermédiaire (12) une crête de moulure (152) destinée à assurer une étanchéité linéaire contre l'unité hydraulique (62, 64) respective,
dans laquelle les moulures d'étanchéité (112, 114, 116, 118) sont réalisées dans les couches d'étanchéité (22, 24) de sorte que, lors d'une compression des moulures d'étanchéité (112, 114, 116, 118) au cours du montage de la plaque de commande (10), une déformation plastoélastique s'établit au moins par endroits entre les unités hydrauliques (62, 64), et **caractérisée en ce qu'**une force d'étanchéité, qui est supérieure à une force d'étanchéité minimale déterminée de 5 N/mm² et atteint la force d'étanchéité de 100 N/mm² ou moins, est obtenue sur toute l'étendue linéaire de la crête de moulure (152) respective,
**que** les moulures d'étanchéité (112, 114, 116, 118) présentent encore une course de détente de 10 µm ou plus après la déformation plastoélastique pour obtenir la force d'étanchéité minimale prévue, et
**que**, lors d'une déformation plastoélastique de la moulure d'étanchéité (112, 114, 116, 118) respective à une hauteur de moulure (HD), qui est supérieure de 5 µm à la hauteur de moulure (HD) lors d'une compression de bloc, la force d'étanchéité (DK) se situe dans une plage qui va de 40 N/mm² à 80 N/mm², et/ou
**que**, lors d'une déformation plastoélastique des moulures d'étanchéité (112, 114, 116, 118) à une hauteur de moulure (HD) qui se situe à 50 µm au-dessus de la hauteur de moulure (HD) lors d'une compression de bloc, la force d'étanchéité (DK) se situe dans une plage qui va de 5 N/mm² à 20 N/mm²,
une compression de bloc étant définie par une hauteur de moulure (HD) égale à zéro.

2. Unité selon la revendication 1, **caractérisée en ce que** les moulures d'étanchéité (112, 114, 116, 118) présentent encore une course de détente de 15 µm ou plus après la déformation plastoélastique pour obtenir la force d'étanchéité minimale prévue.

3. Unité selon la revendication 2, **caractérisée en ce que** les moulures d'étanchéité (112, 114, 116, 118) présentent encore une course de détente de 10 µm ou plus ainsi que la force d'étanchéité minimale prévue après au moins 1,5 millions de cycles de détente.

4. Unité selon l'une quelconque des revendications précédentes, **caractérisée en ce que** la hauteur de moulure (H) des moulures d'étanchéité (112, 114, 116, 118) encore non déformées est, dans la couche d'étanchéité (22, 24), de 10 µm ou plus, notamment 20 µm ou plus.

5. Unité selon l'une quelconque des revendications précédentes, **caractérisée en ce que** la hauteur de moulure (H) des moulures d'étanchéité (112, 114, 116, 118) encore non déformées est, dans la couche d'étanchéité, de 150 µm ou moins.

6. Unité selon l'une quelconque des revendications précédentes, **caractérisée en ce que** la largeur de moulure (B) des moulures d'étanchéité (112, 114, 116, 118) encore non déformées est de 0,5 mm ou plus et que notamment la largeur de moulure (B) des moulures d'étanchéité encore non déformées est de 1,5 mm ou moins.

7. Unité selon l'une quelconque des revendications précédentes, **caractérisée en ce que** l'épaisseur de matériau (MD) de la couche d'étanchéité (22, 24) est de 150 µm ou plus.

8. Unité selon l'une quelconque des revendications précédentes, **caractérisée en ce que** l'épaisseur de matériau (MD) de la couche d'étanchéité (22, 24) est de 300 µm ou moins.

9. Unité selon l'une quelconque des revendications précédentes, **caractérisée en ce que** les moulures d'étanchéité (14') de la couche d'étanchéité (22, 24) respective sont pourvues, sur leur face tournée vers l'unité hydraulique (62, 64) respective, d'un revêtement élastomère (166).

10. Unité selon l'une quelconque des revendications précédentes, **caractérisée en ce que** les pieds de moulure (132, 134) de la couche d'étanchéité (22, 24) respective sont pourvus, sur leur face tournée vers la couche intermédiaire, (12) d'un revêtement élastomère (162, 164) .

11. Unité selon la revendication 9 ou 10, **caractérisée en ce que** le revêtement élastomère (162, 164, 166) présente une épaisseur de 10 µm ou plus et que notamment le revêtement élastomère (162, 164) présente une épaisseur de 50 µm ou moins.

12. Unité selon l'une quelconque des revendications précédentes, **caractérisée en ce que** la couche intermédiaire (12) présente une épaisseur de matériau (MZ) de 800 µm ou plus et que la couche intermédiaire (12) présente une épaisseur de matériau (MZ) de 2600 µm ou moins.
